(19) Europäisches Patentamt European Patent Office Office européen des brevets

(11) **EP 4 318 165 B1**

(12) **EUROPEAN PATENT SPECIFICATION**

(45) Date of publication and mention
of the grant of the patent:
**12.03.2025 Bulletin 2025/11**

(21) Application number: **23188442.0**

(22) Date of filing: **28.07.2023**

(51) International Patent Classification (IPC):
**G05D 1/00** *(2024.01)* **B66F 9/06** *(2006.01)*
**B66F 9/24** *(2006.01)* **B66F 17/00** *(2006.01)*
**G05D 1/242** *(2024.01)* **G05D 1/243** *(2024.01)*
**G05D 1/248** *(2024.01)* **G05D 1/667** *(2024.01)*
**G05D 105/28** *(2024.01)* **G05D 107/70** *(2024.01)*
**G05D 109/10** *(2024.01)* **G05D 111/10** *(2024.01)*
**G05D 111/50** *(2024.01)* **G05D 111/63** *(2024.01)*
**G05D 111/67** *(2024.01)* **B66F 9/075** *(2006.01)*
**G05D 1/244** *(2024.01)*

(52) Cooperative Patent Classification (CPC):
**B66F 9/063; B66F 9/0755; B66F 9/24;**
**B66F 17/003; G05D 1/242; G05D 1/2435;**
**G05D 1/244; G05D 1/248; G05D 1/667;**
G05D 2105/28; G05D 2107/70; G05D 2109/10;
G05D 2111/10; G05D 2111/17; G05D 2111/52;
(Cont.)

(54) **INDUSTRIAL TRUCK AUTONOMOUS OR ASSISTED DRIVING USING A PLURALITY OF CAMERAS**

AUTONOMES ODER UNTERSTÜTZTES FAHREN EINES FLURFÖRDERZEUGS UNTER VERWENDUNG MEHRERER KAMERAS

CONDUITE AUTONOME OU ASSISTÉE DE CHARIOT DE MANUTENTION À L'AIDE D'UNE PLURALITÉ DE CAMÉRAS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.08.2022 IT 202200016311**

(43) Date of publication of application:
**07.02.2024 Bulletin 2024/06**

(73) Proprietor: **Toyota Material Handling Manufacturing Italy S.p.A 40132 Bologna (IT)**

(72) Inventor: **CAMPISI, Andrea 40132 Bologna (BO) (IT)**

(74) Representative: **Hoffmann Eitle Hoffmann Eitle S.R.L. Piazza Sigmund Freud 1 20154 Milano (IT)**

(56) References cited:
**WO-A1-2021/170852 US-A1- 2014 277 691
US-B2- 10 689 194**

(52) Cooperative Patent Classification (CPC): (Cont.)
    G05D 2111/64; G05D 2111/65; G05D 2111/67

**Description**

<u>Technical field</u>

Example aspects herein relate to autonomous or assisted driving of an industrial truck, and in particular to a system for autonomous or assisted driving of an industrial truck, an industrial truck, a method, a computer program, and a controller.

<u>Background</u>

Industrial trucks, such as forklift trucks, towing trucks, dollies, carts, rack carriers, hand-lift trucks, etc., handle and carry material in an industrial environment, such as a warehouse. Industrial trucks may have an autonomous-driving function allowing the truck to navigate in the industrial environment without being operated by a human, and/or an assisted-driving function providing indications to a human operator of the truck to correct the operation of the truck, or, adjusting automatically the operation of the truck.

In order to perform an autonomous-driving or assisted-driving function, information regarding the position of the truck in the industrial environment must be accurate in order to ensure the industrial truck interacts with other elements in the industrial environment in an appropriate way, and risks of collision are reduced. Known systems for obtaining information relating to the position include LIDAR (Light Detection and Ranging) sensors, satellite navigation receives such as GNSS (Global Navigational Satellite System) receivers, or IMUs (Inertial Measurement Unit). Based on the collected information relating to the position, the system generates a control signal for performing the autonomous/assisted-driving function, for example by causing a visual and or audio indication to be provided to the operator (e.g. via a display, lights and/or loudspeakers), or by controlling a movement of the truck automatically.

However, satellite navigation receivers in known systems may be unable to obtain sufficient data to obtain accurate information relating to a position of the truck, for example if signals from satellites are obstructed, which occurs in particular in an indoor industrial environment. In that case, as the position of the truck cannot be accurately determined, the autonomous/assisted-driving function is negatively affected. Similarly, the LIDAR may be unable to detect sufficient features, for example if the environment of the industrial truck does not contain surfaces from which light signals can be reflected.

US 2014/0277691 A1 describes a system for automated inventory management and material handling that is said to remove the requirement to operate fully automatically or all-manual using conventional vertical storage and retrieval machines. Inventory requests to place palletized material into storage at a specified lot location or retrieve palletized material from a specified lot are resolved into missions for autonomous fork trucks, equivalent mobile platforms, or manual fork truck drivers (and their equipment) that are autonomously or manually executed to effect the request. Automated trucks plan their own movements to execute the mission over the warehouse aisles or roadways sharing this space with manually driven trucks. Automated units drive to planned speed limits, manage their loads (stability control), stop, go, and merge at intersections according human driving rules, use on-board sensors to identify static and dynamic obstacles, and human traffic, and either avoid them or stop until potential collision risk is removed.

WO 2021/170852 A1 describes a method for controlling an automatic guided vehicle, AGV, to transport at least two loads from a load picking-up area to an operating area in which the at least two loads are to be placed in corresponding loading areas. The method can comprise the steps of picking-up a first load with the AGV in the load picking-up area, guiding the AGV with the first load by guiding means from the load picking-up area to the operating area, moving the AGV in the operating area to map virtual boundaries in the operating area within which the at least two loads are to be placed in the corresponding loading areas, generating a loading pattern for placing the at least two loads in the corresponding loading areas within the virtual boundaries in the operating area and generating travel trajectories which the AGV has to travel with each of the at least two loads to place the at least two loads in the corresponding loading areas, placing the first load in the corresponding loading area based on the generated loading pattern and the generated travel trajectory for the first load, mapping the operating area with the placed first load placed in the corresponding loading area and verifying whether the first load in the corresponding loading area corresponds to the loading pattern in such a manner that the at least one further load is able to be placed according to the loading pattern, and if the first load in the corresponding loading area does not correspond to the loading pattern in such a manner that the at least one further load is able to be placed according to the loading pattern, correcting the position and/or orientation of the first load in such a manner that the at least one further load is able to be placed according to the loading pattern.

US 10,689,194 B2 describes a system for moving payloads, using one or more mobile robots. Each mobile robot comprises a payload bearing platform, and a payload release latch. The system includes one or more stack exchangers having a set of alignment rails, a payload transfer ramp, and a latch engagement bar. The mobile robots pass through the stack exchanger and pick up a payload or drop off a payload without fully stopping motion.

<u>Summary</u>

There is therefore a need to improve the reliability of systems obtaining position information.

According to a first aspect of the present invention, there is provided a system as set out in Claim 1.

According to a second aspect of the present invention, there is provided an industrial truck as set out in Claim 9.

According to a third aspect of the present invention, there is provided a method as set out in Claim 10.

According to a fourth aspect of the present invention, there is provided a computer program as set out in Claim 11.

According to a fourth aspect of the present invention, there is provided a controller as set out in Claim 12.

Brief description of the drawings

Embodiments of the present invention, which are presented for better understanding the inventive concepts, but which are not to be seen as limiting the invention, will now be described with reference to the figures in which:

Figure 1 is a schematic diagram of elements of a system for autonomous or assisted driving of an industrial truck;

Figure 2 is a top view of an industrial truck showing elements of the system mounted on the industrial truck;

Figures 3A and 3B are top views of an industrial truck in an industrial environment;

Figure 4 shows processing operations in a method for the autonomous or assisted driving of an industrial truck;

Figure 5 shows processing operations performed to generate first position information;

Figure 6 shows processing operations performed to generate second position information;

Figure 7 shows processing operations performed to generate the control signal;

Figure 8 shows examples of optical markers that may be detected based on video signals;

Figure 9 shows a schematic diagram of how LIDAR data may be correlated to data from video signals.

Detailed description

According to a first example aspect herein, there is provided a system for autonomous or assisted driving of an industrial truck, the system being mountable in or on the industrial truck, and comprising:

- a first localization device for locating the industrial truck, the first localization device being configured to generate, based on data received from a global navigation satellite system, GNSS, first position information indicating a position of the industrial truck;
- a plurality of cameras configured to capture an environment of the industrial truck to generate a plurality of video signals;

- a second localization device for locating the industrial truck, wherein the second localization device includes processing means configured to generate, based on the video signals, second position information indicating a relative or absolute position of the industrial truck ; and
- a controller configured to generate a control signal for performing an autonomous/assisted driving function of the industrial truck based on the first position information and the second position information.

As used herein, the term position includes a location of the industrial truck. In addition, the position may define an orientation of the industrial truck. The position may be an absolute position if it defines an absolute location of the truck (e.g. a geolocation such as latitude and longitude coordinates), or a relative position if it defines a location of the truck relative to a fixed reference point (e.g. at least one of a distance and an orientation relative to one or more reference points, whether the absolute location of the reference point(s) is known or not).

In contrast with an object/obstacle avoidance function performed in a vehicle which determines a distance between the vehicle to an object, fixed or not, to avoid the object, the aspects disclosed herein are used for locating the industrial truck. The first position information and the second position information are distinct from any data that may be used in obstacle avoidance in that they indicate a position of the industrial truck.

The position of the industrial truck may be represented by one or more points corresponding to the industrial truck (e.g. the center of gravity, the centroid of a shape corresponding to an outline of the truck when viewed from the top, corners of the outline of the truck when viewed from the top, etc.).

Each of the first position information and the second position information therefore includes information for determining the position of the industrial truck in a two-dimensional or three-dimensional space (e.g. a map of the industrial environment, such as the warehouse), and may include at least one of a location (e.g. a location relative to a detected marker or an absolute location), a distance (e.g. a distance travelled by the truck between two time instants, a distance from a detected marker, etc.), a movement (e.g. a distance travelled and a direction of the movement), etc.

The second position information may be an absolute position if the second localization device can identify a reference point with a known absolute location (e.g. by detecting an optical marker whose orientation and absolute location is known, and by determining at least the industrial truck's location relative to the detected marker).

Thus, the first position information indicates an estimated current or recent (e.g. taking into account a delay such as delays due to buffering, processing, transmission, etc. of signals and data) position of the industrial truck. Similarly, the second position information indicates an estimated current or recent position of the industrial truck.

Accordingly, as the control signal for performing the autonomous/assisted driving function is based on both the first position information and the second position information, the autonomous/assisted driving function can be more reliably and more accurately performed.

Preferably, the control signal controls a movement of the industrial truck, and/or causes notification of information assisting the control of the industrial truck to be provided to an operator.

As used herein, controlling a movement may include interrupting the movement, or more generally modifying an ongoing movement (e.g. changing the speed and/or direction of the movement). The notification of information may be provided via visual, audio and/or haptic means. Alternatively or additionally, the control signal may control the activation or deactivation of other processes related to the autonomous/assisted driving function, such as the handling (e.g. loading/unloading) of material, the coupling or decoupling of the industrial truck to another vehicle, etc. The activation/deactivation may be based on an order of priority of processes, e.g. an order predefined by an operator.

Preferably, the processing means is configured to process two or more of the plurality of video signals to generate at least one combined video signal.

Combining video signals, for example by performing an image stitching process on frames captured by different cameras at the same time instant, may improve object (e.g. optical marker) recognition, for example if each of the cameras only partially capture an object, but the combination of video signals produced reconstruct the object.

Accordingly, a reconstruction of the environment of the industrial truck is improved. This, in turn, improves the accuracy of the second position information, which improves the accuracy of the autonomous/assisted driving function.

The controller is configured to compare the first position information and the second position information for verifying the correctness of the position indicated by the first position information, and/or to adjust an estimation of the position of the industrial truck based on the result of the comparison.

Accordingly, the second position information can be used to confirm the accuracy of the first position information and thus improve the accuracy of the autonomous/assisted driving function being performed.

Preferably, the controller is configured to determine a distance between a first position indicated by the first position information and a second position indicated by the second position information, and to generate a signal for triggering an alert if the determined distance exceeds a predetermined threshold.

The triggered alert notifies the operator of the truck or another human operator (e.g. an operator supervising the environment of the industrial truck) that the position of the truck may be inaccurate. The threshold can therefore be predetermined based on an acceptable margin of error which can depend on the type of industrial truck, the material manipulated/carried, the industrial environment, etc. The threshold may also be varied during the operation of the industrial truck, for example due to changes to the current operation of the industrial truck (including the loaded material, the environment, etc.). The term "predetermined threshold" should therefore not be understood to be limited to a fixed threshold set for example during manufacturing of the system, and may instead be determined at the beginning of a specific operation of the industrial truck, or when the industrial truck is used in a new industrial environment. Additionally, the threshold may vary based on the operation of the industrial truck and/or based on areas in the environment, for example by using a smaller threshold when the industrial truck is to interact with, or is in proximity to sensitive or fragile equipment, when the risk of collision is high (e.g. if there are a larger number of industrial trucks operating in the vicinity) or by using a larger threshold when the industrial truck does not need to interact with another equipment and the risk of collision is low, etc.

The alert may be one or a combination of an audio alert (e.g. an alarm), to be heard by an operator of the industrial truck or, a visual alert (e.g. a notification displayed on a screen provided on the industrial truck or on a device monitored by a supervisor (e.g. a computer or a hand-held device), a haptic feedback (e.g. by means of a vibrating device mechanically coupled to a control of the industrial truck held by the operator).

When generating the signal for triggering an alert, the control signal for performing the autonomous/assisted driving function may be a signal causing an interruption in a movement or preventing a movement of the industrial truck, causing a movement of the industrial truck to reduce the distance between the first position and the second position, or an indication to the human operator to interrupt the movement or reduce the distance between the first position and the second position.

Accordingly, a loss of accuracy when determining the position of the industrial truck can be detected and corrective action may be taken, thus improving the reliability and accuracy of the autonomous/assisted driving function being performed.

Preferably, the controller is configured to use the second position information for generating the control signal, when the first localization device does not generate the first position information.

Accordingly, when signals from the GNSS system cannot be received, or when the received signals do not provide sufficiently accurate information, the autonomous/assisted driving function can continue to be performed based on the second position information, thus improving the reliability of the autonomous/assisted driving function.

Preferably, the controller is configured to estimate a current position of the industrial truck based on both the first position information and the second position information.

Accordingly, by using both the first position information and the second position information, the current position of the industrial truck can be more accurately determined. For cases where the control signal causes the autonomous/assisted driving function to operate based on the estimated position of the industrial truck, the accuracy of the autonomous/assisted driving function can be improved as well.

Preferably, the system comprises a database accessible by the second localization device, the database being configured to store each of a plurality of different optical markers in association with a corresponding marker position, wherein the processing means is configured to detect an optical marker positioned near the industrial truck, based on at least one of the video signals, and to generate the second position information based on the marker position corresponding to the detected optical marker.

The database may be any database controlled/managed by processing means of the second localization device, e.g. a database included in a memory of the second localization device, or it may be a separate element of the system on the industrial truck which is communicatively coupled to the second localization device which may receive a query from the second localization device and output a response to the query. In the latter case, the database may include storage means and processing means to manage the database and interact with the second localization device.

The database may include information identifying the marker (e.g. an identifier, an image of the optical marker, etc.), in association with information indicating the marker position.

The optical markers may be located in the industrial environment where the industrial truck operates. As the marker position is stored in advance in the database, detecting the optical marker from the video signals allows the second localization device to correlate a position of the industrial truck and the position of the detected marker.

The optical markers may be placed (e.g. affixed, painted on, engraved, etc.) on a surface in the industrial environment (e.g. on a wall, a column, a ceiling, a floor, or on an equipment in the industrial environment). Any type of visually detectable optical markers to be used as reference can be used, and include, in particular fiducial markers placed for the purpose of optical detection by the cameras (e.g. linear or circular barcodes, QR codes, ArUco, AprilTag, WyCon markers, WyCode markers). The optical markers be other distinctive elements such as signs, markings, tracks (e.g. road markings, warning signs, information signs), or any other distinctive feature of the industrial environment (e.g. a distinctive doorway, a combination of colors between separate sections of the warehouse, etc.).

As the plurality of cameras are mounted on the same industrial truck, they may capture the same optical marker at different time instants during a movement of the industrial truck, or, two cameras having (partially) overlapping capturing ranges may capture the same optical marker at the same time instant. The processing means of the second localization device can therefore detect the optical marker from one or more of the video signals, for example by using a known image processing for object recognition. This in turn may improve the accuracy of the second position information.

Preferably, the database may store, in association with the optical marker, information on the size and/or orientation of the optical marker.

Accordingly, the processing means may be configured to determine, from the at least one video signal, at least one of a distance and an orientation of the optical marker relative to the camera(s) generating the at least one video signal, based on the information on the size and/or orientation of the optical marker.

Preferably, at least two cameras of the plurality of cameras have respective ranges that are partially overlapping. In other words, the at least two cameras are directed in a similar direction such that images captured by each of the at least two cameras at a given time instant include a same portion of the environment.

Accordingly, the processing means may detect a same optical marker based on video signals from the at least two cameras. Because the arrangement the spatial relationship between the at least two cameras is known, the processing means can more accurately determine a spatial relationship of the industrial truck to the optical marker, thus improving the accuracy of the second position means.

Preferably, the processing means is configured to determine a position of the industrial truck by applying a visual odometry process using at least one of the video signals.

The position determined by applying the visual odometry may be, for example, a location relative to the location at the start of the movement of the industrial truck captured by the video signals and for which the visual odometry process is being applied, or it may be relative to the position of an optical marker detected by the processing means during the movement of the industrial truck. It would be understood that, if an absolute position of the industrial truck during or at the beginning of the movement is known (e.g. the position of the industrial truck at the beginning of the movement), the position determined by applying the visual odometry may be an absolute position as well.

The processing means may, for example, perform processing to combine video signals from one or more of the plurality of cameras, such as image stitching, and perform a visual odometry process on the combined video signals. Alternatively, the processing means may perform separate processes on subsets of the plurality of video signals to obtain a plurality of visual odometry data, and combine the visual odometry data.

Preferably, the plurality of cameras includes at least a stereo camera.

Accordingly, a more accurate determination of a distance (e.g. distance to an optical marker, an object) detected in video signals captured by the stereo camera can be made, thus improving the accuracy of the second position information.

Preferably, the at least one stereo camera is to be mounted on a front portion and/or a rear portion of the industrial truck.

By mounting the stereo camera on a front portion of the truck, the stereo camera can aim towards, and capture the environment in a direction of travel of the industrial truck. It would be understood that the stereo camera need not be mounted at the front, but it can be mounted any position allowing the stereo camera to have a clear capturing range when capturing the environment in a direction of travel of the industrial truck, i.e. substantially unobstructed by other parts of the industrial truck (it would be understood that a part of the capturing range may be obstructed, either temporarily by moving parts or permanently by fixed parts, such as a portion of a roof, without preventing the video signals to be used for generating the second position information, or image processing such as recognition of optical marker, object and/or obstacle, image combination, etc.).

Similarly, mounting a stereo camera on a back portion of the industrial truck allows the stereo camera to aim towards, and capture the environment in a direction of travel of the industrial truck (e.g. when the industrial truck is backing up), allowing for the same advantages as described for when the stereo camera is mounted on a front portion above.

Preferably, the plurality of cameras includes at least three monocular cameras.

Each monocular camera may be a type of camera capturing a specific range of wavelengths, e.g. an RGB camera (capturing substantially the visible light spectrum), a near infrared (NIR) camera, an infrared camera, etc. The monocular cameras may be of the same type, which may facilitate the combination of video signals, or they may be of different types, allowing a wider variety of information to be gathered by the plurality of cameras.

By using at least three monocular cameras, the likelihood that two cameras capture a same optical marker, object and/or obstacle can be improved, which in turn improves the accuracy of the second position information that is generated based on the video signals.

Preferably, the at least three monocular cameras are to be mounted on side portions of the industrial truck.

Accordingly, each monocular camera can aim, and capture the environment of the industrial truck, towards a side of the industrial truck. This may facilitate the detection of optical markers during a movement of the industrial truck (e.g. by detecting an optical marker being passed), for example if the industrial truck moves along a wall or other substantially continuous surface on which the optical marker is placed. One of the monocular cameras can detect the optical marker, which would be substantially facing the industrial truck, and thus the camera, thus facilitating the detection of the optical marker.

As a result, the time instant when the industrial truck passes in front of the optical marker can be more accurately determined, thus improving the accuracy of the second position information.

Preferably, the system further comprises at least one of a GPS receiver, a LIDAR and an IMU.

Preferably, the first localization device is configured to generate the first position information based on data obtained from at least one of the GPS receiver, the LIDAR and the IMU.

Accordingly, the first position information may indicate an absolute position using GPS data, or it may be obtained by combining data from independent sources of information, thus improving the accuracy of the first position information, which in turns improves the accuracy of the autonomous/assisted driving function.

Preferably, the first position information includes LIDAR data, and the second position information includes video data based on the plurality of video signals.

Preferably the controller is configured to determine, when a first distance to an optical marker is determined using the video signals, whether the LIDAR data in the first position information includes at least one feature corresponding to the optical marker, to determine a second distance to the optical marker using the LIDAR data, and to compare the first distance and the second distance to verify the accuracy of the first distance and/or the second distance.

Accordingly, the distance to a detected optical marker, which is used as a reference to determine the position of the industrial truck, can be separately estimated using the LIDAR data and the video signals, such that the position of the industrial truck can be more accurately improved, thus improving the accuracy of the autonomous/assisted driving function.

Preferably, the first position information indicates an absolute position.

Accordingly, the industrial truck can be accurately located within the industrial environment, thus improving the accuracy of the autonomous/assisted driving function.

According to a second example aspect herein, there is provided an industrial truck comprising the system according to the first example aspect summarized above.

According to a third example aspect herein, there is provided a method for autonomous or assisted driving of an industrial truck, the method comprising:

generating, based on data received from a global navigation satellite system, GNSS, first position information indicating a position of the industrial truck; receiving a plurality of video signals generated by a plurality of cameras mounted on the industrial truck and capturing an environment of the industrial truck; generating, based on the video signals, second position information indicating a relative or absolute position of the industrial truck; and generating a control signal for performing an autonomous/assisted driving function of the industrial truck based on the first position information and the second position information.

According to a fourth example aspect herein, there is provided a computer program comprising instructions which, when executed by one or more processor, cause the one or more processors to perform the method according to the third aspect summarized above.

According to a fifth example aspect herein, there is provided a controller for autonomous or assisted driving of an industrial truck, the controller configured to perform the method according to the third aspect summarized above.

According to a sixth example aspect herein, there is provided a controller for autonomous or assisted driving of an industrial truck, the controller being configured to:

receive data from a global navigation satellite system, GNSS;
generate first position information indicating a position of the industrial truck; and
generating a control signal for performing an autonomous/assisted driving function of the industrial truck;
characterized in that the controller is further configured to:

receive a plurality of video signals generated by a plurality of cameras mounted on the industrial truck and capturing an environment of the industrial truck; and
generate, based on the video signals, second position information indicating a relative or absolute position of the industrial truck, and
in that the controller is configured to generate the control signal based on the first position information and the second position information.

As used herein, mountable in or on the industrial truck indicate that elements of the system may be connected to a surface of the industrial truck or housed within the industrial truck, and the elements of the system may be placed together or at separate locations in or on the industrial truck.

As used herein, processing means can include one or more processors (e.g. a single/multiple core CPU, microprocessor), graphical processing units (GPU), video processing units (VPU), tensor processing units (TPU), a combination of these or other suitable known types of processing means.

Although example embodiments will be described below, it will be evident that various modifications may be made to these example embodiments without departing from the broader spirit and scope of the invention. Accordingly, the following description and the accompanying drawings are to be regarded as illustrative rather than restrictive.

In the following description and in the accompanying figures, numerous details are set forth in order to provide an understanding of various example embodiments. However, it will be evident to those skilled in the art that embodiments may be practiced without these details.

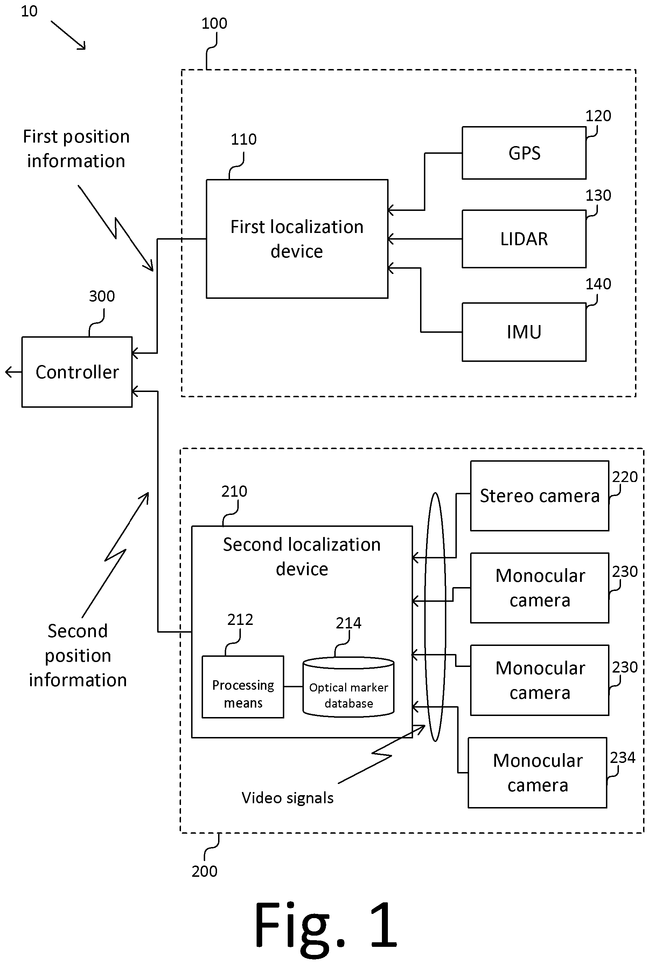

Figure 1 is a schematic diagram of elements of a system 10 for autonomous or assisted driving of an industrial truck, according to an example embodiment.

The system 10 comprises a first localization device 110, a second localization device 210, and a controller 300. The controller is communicatively coupled with the first localization device 110 and the second localization device 210 through any suitable communication link, such as wireless communication link (for example a Wi-Fi, Bluetooth, Controller Area Network (CAN)), a wired or fiber-optic cable (e.g. dedicated signal lines or bus) etc. Each communication link may not be permanent. For brevity, the following will refer to elements being "communicatively coupled" which should be understood to be via any suitable communication link such as those indicated above. Although not shown, the first localization device 110 and the second localization device 210 may be communicatively coupled with each other using any suitable communication link as well.

Each of the first localization device 110, the second localization device 210 and the controller 300 may be embodied by a general processing device, as described further below.

In addition, the system 10 comprises a GPS receiver 120, a LIDAR 130, and an IMU 140 which are communicatively coupled to the first localization device 110. The first localization device 110, the GPS receiver 120, the LIDAR 130, and the IMU 140 can be defined together as a first localization system 100.

The system 10 also comprises a stereo camera 220, and three monocular camera 230, 232 and 234, each communicatively coupled with the second localization device 210. The second localization device 210, the stereo camera 220, and the monocular cameras 230, 232 and 234 can be defined together as a second localization system 200.

The first localization device 110 and the second localization device 210 are each for locating the industrial truck, and independently provide to the controller 300 information for locating the industrial truck (i.e. the first position information and the second position information, respectively.

The GPS receiver 120 receives data from satellites and provides GPS data indicating an absolute location of the GPS receiver 120 to the first localization device 110. The GPS data provided to the first localization device 110 can be according to a predetermined format, for example GPS NMEA data. The data provided can include not only the location of the GPS receiver, in terms of latitude and longitude, but also the accuracy and/or quality of the signals received, and thus of the location acquired using GPS data.

The LIDAR 130 comprises a number of light emitting elements (e.g. lasers) and light sensors (not shown), and generates a mapping of features detected using the light emitted by the light emitting elements which is reflected on objects in the environment of the industrial truck and sensed by the light sensors.

The IMU 140 comprises a number of accelerometers, gyroscopes and other elements calculating changes in the acceleration, velocity and thus position of the IMU, which is mounted in or on the industrial truck. Details on the functioning of GPS receivers, LIDARs and IMUs that would now be apparent to those skilled in the art based on the above description will be omitted here, for brevity.

The first localization device 110 receives GPS data from the GPS receiver 120, LIDAR data from the LIDAR 130 and IMU data from the IMU 140, uses the received data to generate first position information, and provides the first position information to the controller 300.

The stereo camera 220 generates a stereoscopic video signal, and each monocular camera 230, 232 and 234 generates a respective monocular video signal, which are provided to the second localization device 210.

The second localization device 210 includes processing means 212 and optical marker database 214.

The processing means 212 is configured to perform various processes on the received video signals, to generate second position information based on the video signals, and to provide the second position information to the controller 300.

The optical marker database 214 stores a plurality of different optical markers, for example an image representing each optical marker, in association with a corresponding marker absolute position. The optical marker database 214 may be accessed by the processing means 212 to obtain the optical marker or the corresponding marker position.

The controller 300 receives the first position information from the first localization device 110, the second position information from the second localization device 210, and generates a control signal for performing an autonomous/assisted driving function of the industrial truck based on the first position information and the second position information.

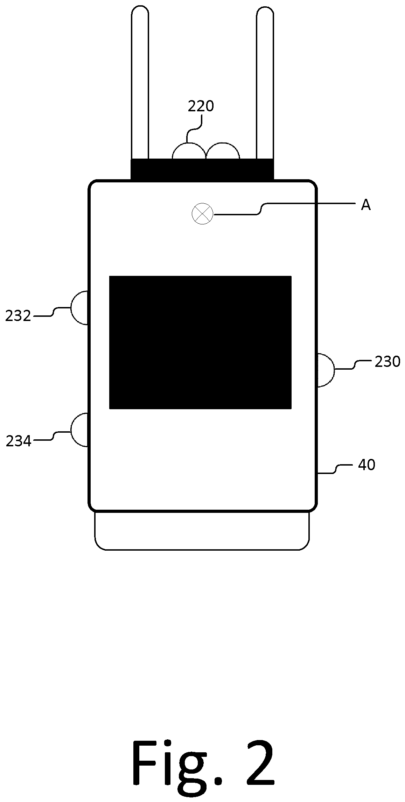

Referring now to Figure 2, an example of an industrial truck including the system 10 is shown from the top.

In the example shown on Figure 2, the industrial truck is a fork-lift 40. The stereo camera 220 is disposed at the front of the fork-lift 40, the monocular camera 230 is disposed on a side of the fork-lift 40 and the monocular cameras 232 and 234 are disposed at different locations on the opposite side of the fork-lift 40.

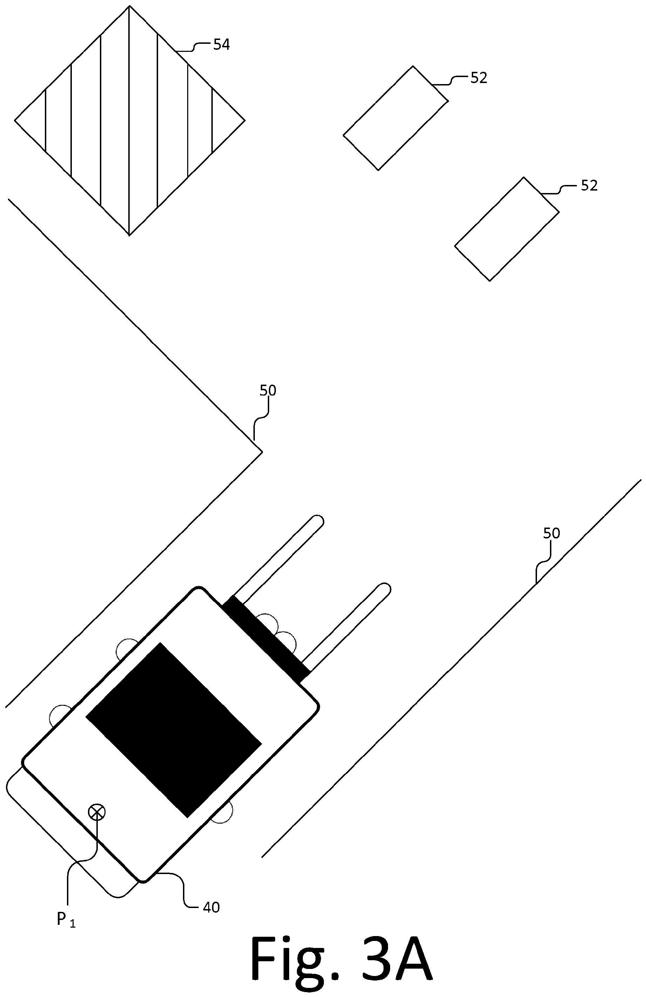

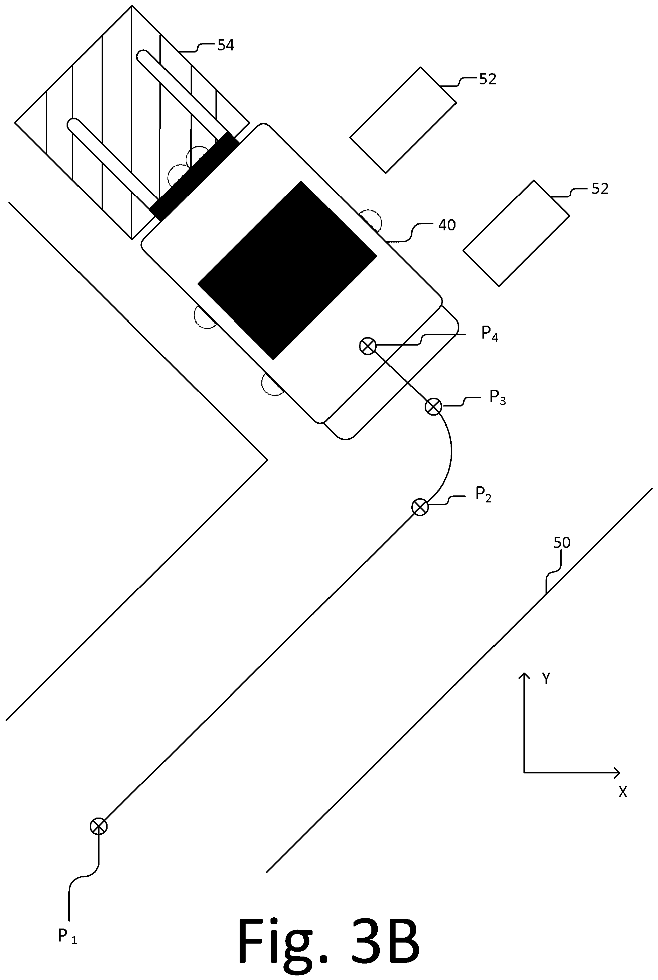

Still in the example of Figure 2, the position of the fork-lift 40 is represented by the point A. For simplicity, the example of Figure 3A and 3B represents the position of the fork-lift as a single point (e.g. corresponding to the centroid of a shape corresponding to an outline of the truck when viewed from the top in Figure 2, or a point along a longitudinal axis of the industrial truck at the back portion on Figure 3A and 3B). However, this would be understood to be purely illustrative and not limited, as other any other point corresponding to the industrial truck, or plurality of points could be used instead (e.g. corners of the outline of the truck when viewed from the top, entire outline of the truck, etc.).

Together with point A, the position of the fork-lift 40 may be represented by a direction (for example a direction towards the front of the fork-lift 40).

Referring now to Figure 3A, an example of the industrial truck (in this example, the fork-lift 40 of Figure 2), in an industrial environment will be shown.

As shown on Figure 3A, the industrial environment (e.g. a warehouse), includes elements such as walls 50, columns 52 and a loading/unloading zone 54, which is a destination of the fork-lift 40. However, this should be understood to be purely illustrative as the industrial truck may operate in another type of industrial environment, and the industrial environment may include other types of obstacles, objects etc. such as human workers, other industrial trucks, other vehicles, equipment, etc.

For example, the fork-lift 40 may carry material which is to be unloaded at the loading/unloading zone 54, for storage or so it may be handled by another equipment. Accordingly, the autonomous/assisted driving function may be performed to move the fork-lift 40 from an initial position P1 to the loading/unloading zone 54, or assist a human operator of the fork-lift 40 to control of the fork-lift 40 while moving from the initial position P1 to the loading/unloading zone 54, following a path that avoids collision with the walls 50, the columns 54 or moving objects (such as workers or other industrial trucks) present between the position P1 and the loading/unloading zone 54.

Figure 3B shows the fork-lift 40 at position P4, i.e. when it is at the loading/unloading zone 54, having passed through intermediate positions P2 and P3. For example, the presence of walls 50 on both sides of the segment between positions P1 and P2 may hinder the quality of the signals received by the GPS receiver 120, thus affecting the accuracy of the first position information. To avoid a collision with the walls, the system 10 uses the second position information to verify the correctness of the position indicated by the first position information. If necessary, the system 10 may adjust an estimation of the position of the industrial truck based on a comparison between the first position information and the second position information.

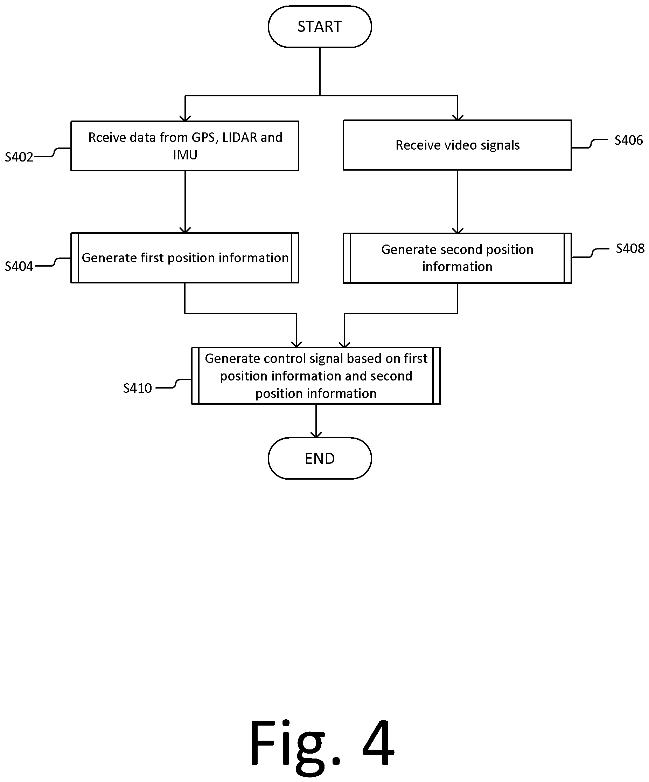

Referring now to Figure 4, processing operations in a method for the autonomous or assisted driving of an industrial truck will now be described.

At step S402, the first localization device 110 receives data relating to a position of the industrial truck from the GPS receiver 120 (as an example of a GNSS), from the LIDAR 130, and from the IMU 140, i.e. GPS data from the GPS receiver 120, LIDAR data from the LIDAR 130, and IMU data from the IMU 140.

The GPS data may include, for example a number of (one or more) GPS positions each associated with a respective time instant, thus indicating a sequence of pairs of positions and time instants representing the movement of the GPS receiver (and thus of the industrial truck). For example, referring to Figure 3B, the GPS data received may indicate associations between: the position P1 and a time T1, the position P2 and a time T2, the position P3 and a time T3, and the position P4 and a time T4, where times T1, T2, T3 and T4 occur in successive chronological order.

The LIDAR data may include a mapping of features (e.g. cloud of points) detected by the LIDAR at one or more time instants, and the IMU data may include a number of measurements by the IMU at one or more time instants. The time instants for the GPS data, the LIDAR data and the IMU may be the same, or they may be different from each other. It would be understood that data relating to the position of the industrial truck from different time instants can be used together, for example by using interpolation/extrapolation of the data.

In the present example, the first position information includes at least, for two distinct time instants, a GPS position, LIDAR data and IMU data.

At step S404, the first localization device 110 generates first position information based on the data relating to a position of the industrial truck, where the first position information indicates a position of the industrial truck.

At step S406, the second localization device 210 receives video signals from the stereo camera 220, and the monocular cameras 230, 232 and 234.

At step S408, the second localization device 210 generates second position information based the video signals, where the second position information indicates a relative or absolute position of the industrial truck.

At step S410, the first controller 300 receives the first position information from the first localization device 110, receives the second position information from the second localization device 210, and generates a control signal for performing an autonomous/assisted driving function of the industrial truck.

Although steps S402, S404, S406, S410 are described as single steps, it would be understood that each of these processing may be repeated at regular or irregular intervals, or may be continuously performed. These need not be performed at the same cycle.

For example, GPS data, LIDAR data, and video signals may be continuously received (steps S402 and S406), or may be provided in parts (e.g. segments of video signals being buffered at the cameras before being transmitted). Similarly, the first position information and the second position information may be repeated at regular or irregular intervals. The transmission of data/information may be provided relative to previously provided values, for example to reduce the amount of transmitted data.

By way of example, referring back to Figure 3B, the first localization device 110 may provide the first position information to the controller 300 continuously, using continuously acquired GPS data, LIDAR data and IMU data, whereas the second localization device 210 may receive the video signals continuously but provide the second position information four times between the position P1 and P4 (e.g. at positions P1, P2, P3 and P4 shown on Figure 3B).

In the present example, the control signal is for performing an autonomous driving function of the industrial truck, and is provided as an instruction to a controller driving a movement of the truck, for example to rectify a speed and/or direction of the industrial truck.

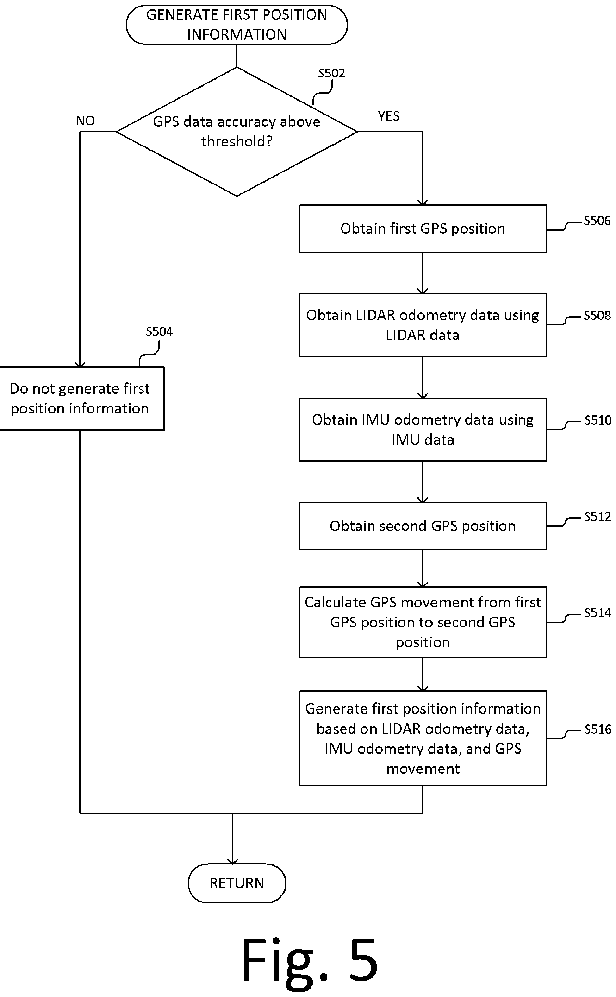

Figure 5 shows the processing operations performed by the first localization device 110 at step S404 in an example embodiment.

Referring to Figure 5, at step S502, the first localization device 110 determines whether the GPS data received from the GPS receiver 120 has an accuracy equal to or above a predetermined threshold.

The GPS data may, for example, indicate a position and include a quality indicator and a number of satellites used to derive the position. The threshold may be defined as a minimum quality and/or a minimum number of satellites required.

If the accuracy of the GPS data is below the threshold (NO at step S502), processing proceeds to step S504.

At step S504, the first localization device 110 determines not to generate first position information. This is because the accuracy of the first position information would rely on inaccurate GPS data, and thus increase risks of incorrect driving of the industrial truck or collision with the environment.

If on the other hand the accuracy of the GPS data is equal to or above the threshold (YES at step S502), processing proceeds to step S506 instead.

In the present example, the GPS data includes a first GPS position detected at a first time instant, and a second GPS position detected at a second time instant later than the first time instant. The LIDAR data includes mapping of features at the first time instant, at the second time instant, and at a number of time instants (e.g. 5) equally distributed between the first time instant and the second time instant. Similarly, the IMU data includes measurements from the IMU 140 at the same time instants as the LIDAR data (i.e. the first time instant, the second time instant, and the number of time instants inbetween).

At step S506, the first localization device 110 obtains the first GPS position from the GPS data, e.g. by extracting the latitude and longitude from the GPS data.

At step S508, the first localization device 110 obtains LIDAR odometry data using the LIDAR data. Specifically, the first localization device 110 determines changes in the mapping of features between successive time instants to determine the LIDAR odometry data.

At step S510, the first localization device 110 obtains IMU odometry data using the IMU data, and specifically by determining changes in the measurements from the IMU 140 between successive time instants.

At step S512, the first localization device 110 obtains the second GPS position from the GPS data as for the first GPS position.

At step S514, the first localization device 110 calculates a GPS movement from the first GPS position to the second GPS position, for example based on the difference in latitude, and the difference in longitude between the first GPS position and the second GPS position.

At step S516, the first localization device 110 generates the first position information based on the GPS movement, the LIDAR odometry data and the IMU odometry data.

Specifically, in the present example, the first localization device 110 calculates a combined distance based on a combination of a first distance indicated by the GPS movement, a second distance indicated by the LIDAR odometry data and a third distance indicated by the IMU odometry data (e.g. an arithmetic or weighted average, etc.), and generates the first position information as the combined distance and the second GPS position. The combined distance indicates a position of the industrial truck relative to the position at the beginning of the movement.

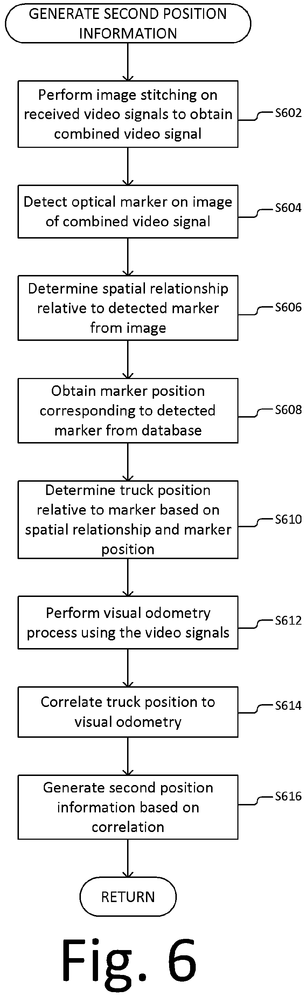

Figure 6 shows the processing operations performed by the second localization device 210 at step S408 in an example embodiment.

Referring to Figure 6, at step S602, the first localization device 110 performs processing for an image combination process (e.g. image stitching) to the received video signals to combine the plurality of video signals into a single video signal.

At step S604, the processing means 212 detects optical markers on images (i.e. frames) of the combined video signal.

Specifically, the processing means 212 accesses the database 214 to obtain images of one or more (e.g. all) of the optical markers. For example, the processing means 212 may retrieve only the images of a subset of the optical markers that are likely to be detected, based on the operation of the industrial truck.

The processing means 212 then applies an image recognition process to the combined video signal to determine whether the video signals show any of the retrieved image(s), and to detect an optical marker if the video signal shows one of the markers.

At step S606, the processing means 212 determine a spatial relationship between the camera having captured the optical marker, and the captured optical marker.

For example, the size of the optical marker on the image can be compared to a predetermined actual size of the optical marker to determine a distance between the camera and the optical marker. In addition, a shape of the optical marker on the image can be compared to a predetermined actual shape of the optical marker to determine an orientation of the optical marker relative to the camera. Details of object recognition that would now be apparent to those skilled in the art based on the above description will be omitted here, for brevity.

At step S608, the processing means 212 access the optical maker database 214 to obtain the marker position corresponding to the marker detected at step S604.

At step S610, the processing means 212 determine a truck position (i.e. a position of the industrial truck) relative to the marker based on the spatial relationship determined at step S606, and the marker position obtained at step S608.

Accordingly, the process at steps S604-S610 allow the processing means 212 to determine an optical marker position that was near the industrial truck at the time instant when the image including the optical marker is captured.

At step S612, the processing means 212 performs a visual odometry process using the combined video signal, to obtain visual odometry data.

For example, the processing means may detect movements of features (e.g. corners, edges, or distinctive shapes) in the combined video signal relative to the cameras, and determine a distance and direction of movement of the industrial truck based on the detected movement. Details of visual odometry processes that would now be apparent to those skilled in the art based on the above description will be omitted here, for brevity.

At step S614, the processing means 212 correlates the truck position and the visual odometry data.

Specifically, the truck position determined at step S610 allows the visual odometry data to be defined relative to the marker position. As a result, the visual odometry data may be used to determine the position of the industrial truck at any time instant during the movement.

At step S616, the processing means 212 generate the second position information based on the correlation.

For example, the second position information may be generated so that it indicates the last position determined based on the visual odometry data as the current (or most recently determined) position of the industrial truck.

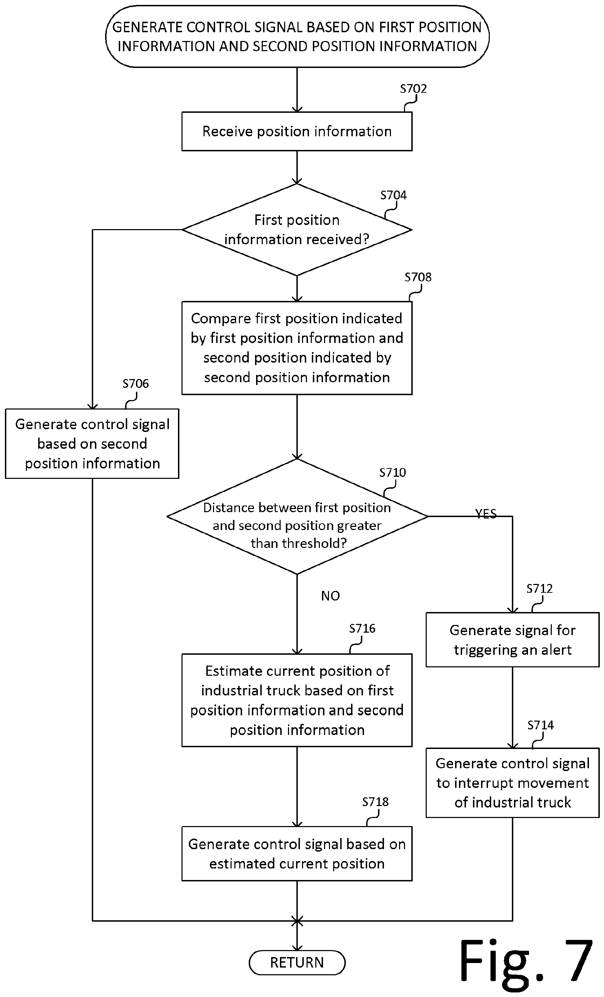

Figure 7 shows processing operations performed by the controller 300 at step S410 in an example embodiment.

At step S702, the controller 300 receives the second position information from the second localization device 210. In addition, the controller 300 may receive the first position information from the first localization device 110, for example if the GPS data is sufficiently accurate to generate first position information.

At step S704, the controller 300 determines whether the first position information was received.

If the controller 300 did not receive the first position information, (NO at step S704), processing proceeds to step S706.

At step S706, the controller 300 generates the control signal based on the second position information only.

If, on the other hand, the first position information is received (YES at step S704), the processing proceeds to step S708.

At step S708, the controller 300 compares a first position indicated by the first position information and a second position indicated by the second position information. In the present example, the first position is the second GPS position Figure 5 above, and the second position is the last position of the industrial truck determined based on the visual odometry data described with reference to Figure 6, step S616 above.

Then, at step S710, the controller determines whether a distance between the first position and the second position is greater than a threshold.

In the present example, the controller calculates the distance as a difference $\Delta$ between the respective coordinates of the first position $P_1$ and the second position $P_2$, as:

$$P_1 = (x_1; y_1) \; P_2 = (x_2; y_2)$$

$$\Delta = \sqrt{(x_2 - x_1)^2 + (y_2 - y_1)^2}$$

where $x_i; y_i$ represent coordinate pairs in a Cartesian coordinate system on which the absolute positions P1 and P2 are mapped. It would however be understood this equation is purely illustrative and any other suitable way of calculating the distance between two points may be used, whether in a Cartesian coordinate system or any other coordinate system.

In the present example the threshold is predetermined, and depends on the size of the industrial truck and the minimum clearance between obstacles or objects in the industrial environment in which the industrial truck operates (e.g. the minimum distance between columns 52 shown on Figures 3A and 3B, or between columns 52 and walls 50, etc.)

If the distance calculated at step S710 is greater than the threshold, the processing proceeds to step S712.

At step S712, the controller 300 generates a signal for triggering an alert. In the present example, the alert is provided to a human operator of the industrial truck as an alarm using a loudspeaker provided on the industrial truck. In addition, a notification is displayed on a display screen monitored by the human operator to indicate that the position determination may be inaccurate.

At step S714, the controller 300 generates a control signal to interrupt a movement of the industrial truck.

In the present example, the movement of the industrial truck using the autonomous/assisted driving is interrupted to avoid that the industrial truck deviates, or further deviates from an intended path. A human operator then manually operates the industrial truck, for example based on the notification indicated on the display screen to move the industrial truck.

If on the other hand, the distance calculated at step S710 is equal to or less than the threshold, the processing proceeds to step S716.

At step S716, the controller 300 estimates a current position of the industrial truck based on the first position information and the second position information.

In the present example, the controller 300 estimates the current position of the industrial truck to be the midpoint between the first position and the second position.

At step S718, the controller generates the control signal for performing the autonomous/assisted driving function, based on the estimated current position.

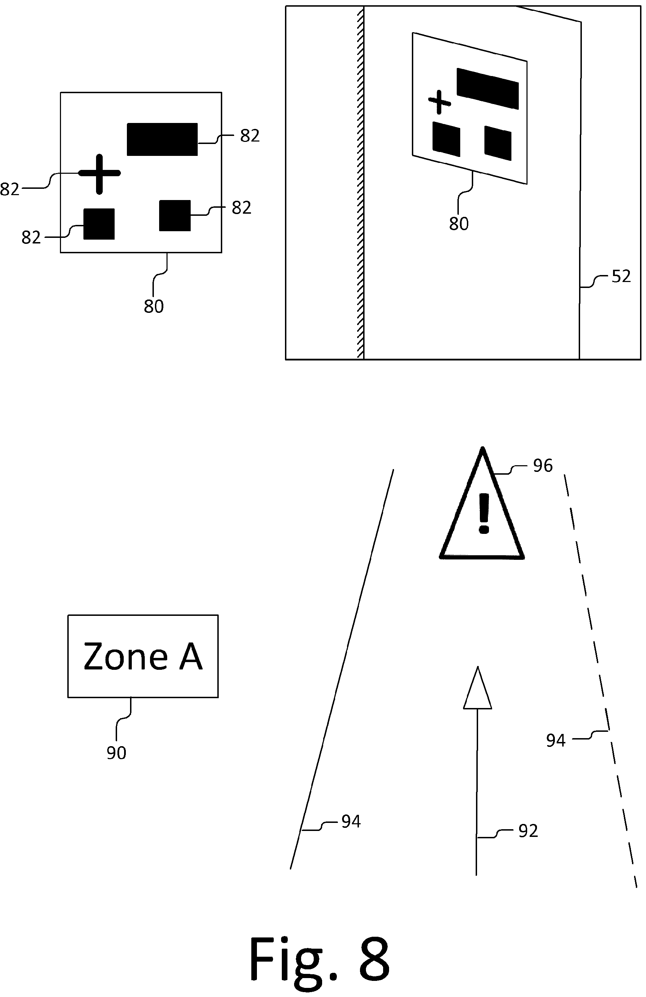

Referring now to Figure 8, examples of optical markers that may be detected based on video signals will now be described.

The top-left corner of Figure 8 shows an example of an image 80 of a fiducial marker (e.g. QR code, ArUco, AprilTag, WyCon marker, WyCode marker) including a number of visual features 82, as stored in the optical marker database 214.

The top-right corner of Figure 8 shows a portion of an image captured by a camera is shown including the same fiducial marker 80 placed in the industrial environment, for example on a surface of a column 52. Based on the arrangement of the visual features 82, the processing means 212 can detect the optical marker 80 using image processing (for example shape or feature recognition processes).

In addition, the processing means 212 can determine a spatial relationship between the detected optical marker 80 and the camera. For example, the size of the detected optical marker (e.g. in number of pixels or ratio of the pixels corresponding to the optical marker to the total number of pixels of the image) can be used to estimate a distance between the detected optical marker 80 and the camera. Additionally, the arrangement of visual features 82 can be used to determine an orientation of the detected optical marker (for example, a direction normal to the surface on which the optical marker 80 is placed), relative to the camera capturing the optical marker 80.

As shown on the bottom-left and bottom-right of Figure 8, optical markers are not limited to fiducial markers. Instead, they may be an information sign such as the sign 90 indicating the name of a particular zone in the warehouse. Optical markers may also be existing markings 94 indicating a lane of travel or a direction of travel 92 in a lane which are placed in the industrial environment (e.g. on the ground), which are used by human operators, or warning signs 96 placed on a surface of the industrial environment to inform human operators of a potential hazard.

In an embodiment, a processing device (such as the first localization device 110, the second localization device 210, and the controller 300) includes at least processor, a memory and a I/O interface. The processor is configured to execute instructions comprised in a computer program stored on the memory to execute any of the functions of the first localization device 110, the second localization device 210 or the controller 300, as above described. The memory is configured to store the computer program, and may also store additional information, such as the database 214. When executing the instructions of the computer program, the processor receives information (e.g. the GPS data, the LIDAR data, the IMU data, the video signals, the first position information, the second position information, etc.) from other elements of the system by means the I/O interface, and output information to the other elements of the system by means of the I/O interface.

Modifications and variations

Many modifications and variations can be made to the example embodiments described above.

In the examples described above, the controller 300, the first localization device 110 and the second localization device 210 are shown as distinct element. However, this is not limiting as it would be understood that these may be gathered as a single device, for example a device including processing means to perform the processing operations described to be done by each of the first localization device 110, the second localization device 210 and the controller 300, in which case the first localization device 110 may be defined as a first localization module, the second localization device 210 may be defined as a second localization module, and the controller 300 may be defined as a control module.

In examples described above, the system includes a GPS receiver 120. However, this is not limiting as it would be understood that the data can be received from another GNSS such as Galileo, GLOSNASS, etc. More generally, the data can be obtained via any type of satellite navigation system allowing a location of the receiver mounted on the industrial truck to be obtained.

In examples described above, the system includes a GPS receiver 120, a LIDAR 130 and an IMU 140. However, this is not limiting as it would be understood that the system can include, instead or in addition to these, other elements obtaining data based which position information can be generated. Thus, any of the GPS receiver 120, LIDAR 130 and IMU 140 may be omitted.

In examples described above, the system includes the stereo camera 220 and three monocular cameras 230, 232 and 234. However, this is not limiting as it would be understood that any other number of cameras (e.g. two or more stereo cameras or no stereo cameras, no monocular cameras or more than three monocular cameras) can be used instead.

In examples described above, the industrial truck is described as a fork-lift, but it would be understood this is a non-limiting example, as the industrial truck may be any other suitable type of industrial truck, such as those described herein.

The examples described above refer to a particular arrangement of the stereo camera 220 and three monocular cameras 230, 232 and 234. However, this is not limiting as it would be understood that each camera may be disposed elsewhere on the industrial truck. In particular, as any other number of cameras can be used, the arrangement can depend on the number of cameras in the system.

In examples described above, the control signal is for performing an autonomous driving function. However, this is not limiting, as the control signal may instead cause a visual and or audio indication to be provided to the human operator (e.g. via a display, lights and/or loudspeakers) driving the industrial truck.

Figure 4 shows steps S402-S404 performed by the first localization device 110 and steps S406-S408 performed by the second localization device 210 occurring in parallel (i.e. contemporaneously). It would be understood that the process performed by the first localization device 110 and the process performed by the second localization device may be performed at different times.

For example, the first localization device 110 may receive data and generate first position information at a predefined cycle, such as once per second, whereas the second localization device may receive video signals continuously and generate second position information when a change in the movement (e.g. a change in speed and/or direction) is detected. As another example, the first localization device 110 and the second localization device 210 may generate and output the first position information and the second information position simultaneously to the controller 300, regardless of the cycle at which they receives data from the GPS receiver 120, the LIDAR 130, the IMU 140 and the cameras 220, 230, 232 and 234. The synchronous output may be achieved for example using a communication link between the first localization device 110 and the second localization device 210.

In examples described above, the first position information includes at least, for two distinct time instants, a GPS position, LIDAR data and IMU data. However, this is not limiting as the first position information may omit LIDAR data and/or IMU data (e.g. in cases where the system does not include the LIDAR 130 and/or the IMU 140).

In examples described above, the first position information includes the second GPS position. However, this is not limiting as the first position information can include instead the first GPS position, or omit any GPS position such that the first position information only indicates a relative position of the industrial truck (e.g. the distance obtained by combining GPS data, LIDAR data and IMU data).

Examples described above provide a specific process of generating the first position information, using GPS data. However, it would be understood that other process suitable for generating position information based on data received from a GNSS may be used instead.

For example, the first localization device 110 may determine a current position of the industrial truck from GNSS data and generate first position information indicating this position.

In addition, in cases where the first localization device 110 receives LIDAR data and/or IMU data, the first localization device 110 may combine the LIDAR data and/or the IMU data with the GPS data, using known data GPS-LIDAR or GPS- IMU data combinations (e.g. by fusion of GPS and LIDAR data and/or GPS and IMU data).

In examples described above, the processing means 212 performs processing to combine the video signals, and various processes (e.g. the optical marker detection and the second position information) are performed using the combined video signal. However, this is not limiting as it would be understood that the processing means 212 may combine only a subset of the video signals (e.g. the video signals provided by cameras facing a same direction, or by the cameras of the same type) and processes the other video signals separately, or the various processes may be performed instead on each received video signal individually, such that the processing to combine video signals may be omitted.

In examples described above, the processing means 212 performs processing to detect an optical marker. However, it would be understood that the optical marker detection process of the processing means 212 and the optical marker database 214 can be omitted in some cases, for example in industrial environments where no optical marker is present. In such cases, steps S604-S610 may be omitted. If so, the second position information may instead indicate a relative position. For example, a last position of the industrial truck relative to the initial position of the industrial truck during the movement detected using the visual odometry process.

In examples described above, the first localization device 110 only transmits the first position information if the GPS data is sufficiently accurate. However, this is non-limiting, as the first localization device 110 may omit performing the process of step S502, and generate the first position information including an indication of the accuracy to the controller 300. In such cases, the controller 300 may determine whether the GPS data is sufficiently accurate, and whether to use the received first position information or not.

Accordingly, steps S502, S504 may be omitted, as well as step S702.

In other examples, neither the first localization device 110 nor controller 300 may determine whether the GPS data is sufficiently accurate, the first localization device 110 always providing the first position information to the controller 300. In such cases, steps S502, S504, S704 and S706 may be omitted.

In examples described above, the threshold is fixed. However, this is not limiting as the threshold may instead be based on the operation of the industrial truck. For example, referring to Figure 3B, a first threshold may be used for the segment of the movement between positions P1 and P2, where the risk of collisions is relatively low, and a second threshold may be used from the moment when the industrial truck approaches position P2, to reduce risks of collisions with the columns 52.

In examples described above, the first position information indicates an absolute position (the second GPS position) and the second position information also indicates an absolute information (any position along the movement detected by visual odometry and correlated to the absolute position of the detected marker). However, this is not limiting, as the first position information and/or the second position information may instead indicate a relative position. The following Case 1 to Case 4 below shows examples of different combinations of first position information and second position information.

Case 1: This exemplifies a situation where both the first position information and the second position information indicate an absolute position of the industrial truck.

The first position information indicates the absolute position P1 at time instant T1, and the second position information may indicate the absolute position of the industrial truck at time instant T1, for example, if the optical marker is detected in the frame of the video signal captured at time instant T1, allowing the absolute position of the industrial truck to be determined based on the absolute marker position acquired from the database 214.

In this case, the absolute position P1 from the first position information is compared with the absolute position indicated by the second position information.

It would however be understood that the absolute position indicated by the first position information may be associated with a time instant different than the time instant where the optical marker is detected. Using the visual odometry data, the absolute position of the industrial truck can be determined for a range of time instants before and after the time instant of the video frame in which the optical marker is detected.

<u>Case 2:</u> This exemplifies a situation where the first position information indicates an absolute position of the industrial truck, and the second position information indicates a relative position of the industrial truck.

The first position information indicates the absolute position P1 at time instant T1, and the absolute position P2 at time instant T2, which may be obtained for example when accurate GPS data can be received at both time instants T1 and T2.

The second position information indicates a Distance D and orientation travelled between T1 and T2, determined from visual odometry. Such second position information may be obtained for example when no optical marker was detected during the movement.

In this case, the distance between positions P1 and P2 from the first position information is compared with the distance D indicated by the second position information.

<u>Case</u> 3: This exemplifies a situation where the first position information indicates a relative position of the industrial truck, and the second position information indicates an absolute position of the industrial truck.

The first position information indicates a distance D travelled between time instants T1 and T2, as determined based on GPS data.

As with Case 1, the second position information indicates the absolute position of the industrial truck at time instant T1.

In this case, the visual odometry data is processed to determine an estimated position of the industrial truck at time instant T2, and to determine a distance between the absolute positions of the industrial truck at time instants T1 and T2.

The determined distance from the visual odometry data is compared to the distance D from the first position information.

<u>Case 4:</u> This exemplifies a situation where both the first position information and the second position information indicate a relative position of the industrial truck.

As with Case 3, the first position information indicates a distance D travelled between time instants T1 and T2, as determined based on GPS data.

As with Case 2, the second position information indicates a Distance D' and orientation travelled between T1 and T2, determined from visual odometry.

In this case, the distance D from the first position information and the distance D' from the second position information are compared.

In the above described example, the alert is provided as an alarm and a visual notification. However, this is not limiting and any other suitable way to alert the human operator, a human supervising the operation of the industrial truck, or a machine (for example a Field Management Server) supervising the operation of the industrial truck, can be used instead.

In examples described above, the control signal generated at step S714 interrupts a movement of the industrial truck. However, this is not limiting. Instead, the controller 300 may, after the processing of step S712, proceed to step S706 by generating a control signal based on the second position information only.

Accordingly, step S714 may be omitted.

In examples described above, the controller 300 compares first position indicated by the first position information to the second position indicated by the second position information. However, this is not limiting. Instead, the controller 300 may calculate a position based on both the first position and the second position, similarly to step S716.

As such, steps S708, S710, S712, and S714 may be omitted

In examples described above, the current position of the industrial truck is estimated at step S716 to be the midpoint between the first position and the second position. However, this is not limiting, as other suitable estimations may be used instead.

For example, when one of the first position and the second position is more accurately determined, the more accurate position can be given more weight in the estimation of the current position.

Specifically, the first position information may include information indicating a first accuracy of the indicated position (e.g. based on the accuracy of GPS data, LIDAR odometry data and/or IMU odometry data received by the first localization device 110). Similarly, the second position information may include information indicating a second accuracy of the indicated position (e.g. based on the accuracy of the visual odometry data, the number of optical markers detected, the level of confidence that each optical marker was correctly detected and/or that the spatial relationship to each detected optical marker was correctly determined).

In that case, the estimated current position of the industrial truck may be determined as a barycenter of the first position and the second position using the first accuracy and the second accuracy as weights assigned to the first position and the second position, respectively.

In some implementations, the second position information can include, when an optical marker is detected in a frame of a video signal, a first distance to an optical marker estimated using video signals, a position of the optical marker relative to the industrial truck, and video signal data corresponding to the frame in which the optical marker is detected. The controller 300 correlate LIDAR data to the video signals, to verify the accuracy of the first distance using LIDAR data included in the first position information.

Specifically, the controller determines whether the LIDAR data includes features collected from the environment at the time instant corresponding to the frame, and if so, whether the LIDAR data includes feature corresponding to the position of the optical marker relative to the truck indicated by the second position information.

From the video signal data in the second position information, the controller 300 may determine an orientation of the optical marker relative to the camera (e.g. angles between the axis of capture of the camera and the pixels corresponding to the detected optical marker).

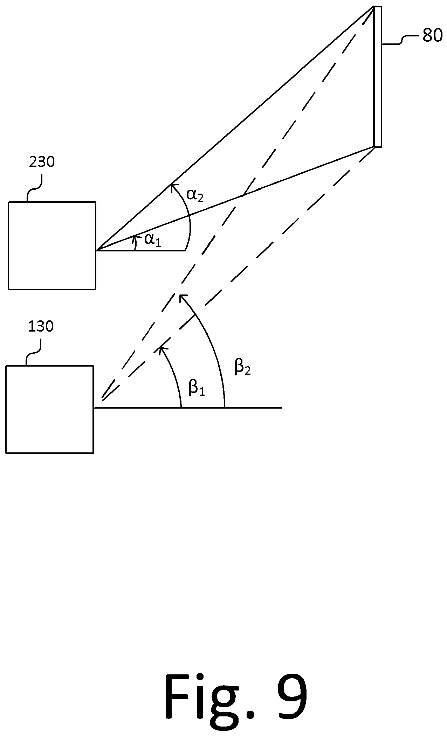

Figure 9 provides an example of the controller 300 correlating the LIDAR data obtained from LIDAR 130 and video signal data obtained from the monocular camera 230, as an example of the plurality of cameras, when detecting the optical marker 80. For simplicity, Figure 9 shows the orientation of the optical marker 80 relative to the camera 230 and the LIDAR 130 in a two-dimensional space, however it would be understood that the orientation may be determined in a three-dimensional space instead. For example, the two-dimensional space may correspond to a map of the industrial environment, and a three-dimensional space may include elevation(s) of different parts of the plan.

From the video signal data, the controller 300 may determine the optical marker 80 is located at a range of angle $\alpha_1$ to $\alpha_2$, relative to the axis of capture of the camera 230. Then, based on the position of the camera 230 and the LIDAR 130 relative to each other, the controller 300 may determine the optical marker 80 corresponds to at a range of angle $\beta_1$ to $\beta_2$ for the LIDAR 130. The controller 300 can therefore determine that the LIDAR data includes a feature corresponding to the optical marker 80 if the LIDAR data includes at least one feature in the range of angle $\beta_1$ to $\beta_2$. Using the LIDAR data, a second distance to the optical marker 80 may be estimated used to verify and/or adjust the first distance, which may be done using a process corresponding to the one described in connection with steps S708, S710 and S716.

Software embodiments of the examples presented herein may be provided as, a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The techniques described herein are not limited to any software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above described example embodiments, but should be defined only in accordance with the following claims and their equivalents.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that any procedures recited in the claims need not be performed in the order presented.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

## Claims

1. A system (10) for autonomous or assisted driving of an industrial truck (40), the system being mountable in or on the industrial truck, and comprising:

    - a first localization device (110) for locating the industrial truck, the first localization device being configured to generate, based on data received from a global navigation satellite system, GNSS (120), first position information indicating a position of the industrial truck;

- a plurality of cameras (220, 230, 232, 234) configured to capture an environment of the industrial truck to generate a plurality of video signals;

- a second localization device (210) for locating the industrial truck, wherein the second localization device includes processing means (212) configured to generate, based on the video signals, second position information indicating a relative or absolute position of the industrial truck ; and

- a controller (300) configured to generate a control signal for performing an autonomous/assisted driving function of the industrial truck based on the first position information and the second position information,

**characterized in that** the controller is configured to compare the first position information and the second position information for verifying the correctness of the position indicated by the first position information, and/or to adjust an estimation of the position of the industrial truck based on the result of the comparison.

2. A system (10) according to claim 1, wherein the controller (300) is configured to determine a distance between a first position indicated by the first position information and a second position indicated by the second position information, and to generate a signal for triggering an alert if the determined distance exceeds a predetermined threshold.

3. A system (10) according to claim 1 or claim 2, wherein the controller (300) is configured to estimate a current position of the industrial truck (40) based on both the first position information and the second position information.

4. A system (10) according to any of claims 1-3,

wherein the system comprises a database (214) accessible by the second localization device (210), the database being configured to store each of a plurality of different optical markers (80; 90; 92; 94; 96) in association with a corresponding marker position,

wherein the processing means (212) is configured to detect an optical marker positioned near the industrial truck (40), based on at least one of the video signals, and to generate the second position information based on the marker position corresponding to the detected optical marker.

5. A system according to claim 4, wherein the database (214) is configured to store, in association with each optical marker (80; 90; 92; 94; 96), information on the size and/or orientation of the optical marker.

6. A system (10) according to any of claims 1-5, wherein the processing means (212 is configured to determine a position of the industrial truck (40) by applying a visual odometry process using at least one of the video signals.

7. A system (10) according to any of claims 1-6, wherein the plurality of cameras includes at least a stereo camera (220) to be mounted on a front portion and/or a rear portion of the industrial truck (40), and at least three monocular cameras (230, 232, 234) to be mounted on side portions of the industrial truck.

8. A system (10) according to any of claims 1-7, further comprising at least one of a global positioning system, GPS, receiver (120), a LIDAR (130) , and an inertial measurement unit, IMU (140),
wherein the first localization device (110) is configured to generate the first position information based on data obtained from at least one of the GPS receiver, the LIDAR and the IMU.

9. A system (10) according to any of claim 1-8, wherein the controller (300) is configured to:

determine, when a first distance to an optical marker (80; 90; 92; 94; 96) is determined using the video signals, whether the LIDAR data in the first position information includes at least one feature corresponding to the optical marker,
determine a second distance to the optical marker using the LIDAR data, and
compare the first distance and the second distance to verify the accuracy of the first distance and/or the second distance.

10. A system (10) according to any of claims 1-9, wherein the controller (300) is configured to use the second position information for generating the control signal, when the first localization device (110) does not generate the first position information.

11. An industrial truck comprising the system according to any of claims 1 to 10.

12. An industrial truck according to claim 11, wherein at least two cameras of the plurality of cameras have respective ranges that are partially overlapping.

13. A method for autonomous or assisted driving of an industrial truck (40), the method comprising:

generating (S404), based on data received from a global navigation satellite system, GNSS (120), first position information indicating a position of the industrial truck;

receiving (S406) a plurality of video signals generated by a plurality of cameras (220; 230; 232; 234) mounted on the industrial truck and capturing an environment of the industrial truck;

generating (S408), based on the video signals, second position information indicating a relative or absolute position of the industrial truck; and

generating (S410) a control signal for performing an autonomous/assisted driving function of the industrial truck based on the first position information and the second position information, **characterized in that** the method comprises comparing (S708) the first position information and the second position information for verifying the correctness of the position indicated by the first position information, and/or to adjust an estimation of the position of the industrial truck based on the result of the comparison.

14. A computer program comprising instructions which, when executed by one or more processor, cause the one or more processors to perform the method according to claim 13.

15. A controller (300) for autonomous or assisted driving of an industrial truck (40), the controller configured to perform the method according to claim 13.

**Patentansprüche**

1. System (10) zum autonomen oder unterstützten Fahren eines Flurförderzeugs (40), wobei das System in oder auf dem Flurförderzeug montierbar ist und umfasst:

- eine erste Lokalisierungsvorrichtung (110) zum Lokalisieren des Flurförderzeugs, wobei die erste Lokalisierungsvorrichtung so konfiguriert ist, dass sie auf der Grundlage von Daten, die von einem globalen Navigationssatellitensystem, GNSS (120), empfangen werden, erste Positionsinformationen erzeugt, die eine Position des Flurförderzeugs angeben;

- eine Vielzahl von Kameras (220, 230, 232, 234), die so konfiguriert sind, dass sie eine Umgebung des Flurförderzeugs erfassen, um eine Vielzahl von Videosignalen zu erzeugen;

- eine zweite Lokalisierungsvorrichtung (210) zum Lokalisieren des Flurförderzeugs, wobei die zweite Lokalisierungsvorrichtung ein Verarbeitungsmittel (212) enthält, die so konfiguriert ist, dass sie auf der Grundlage der Videosignale eine zweite Positionsinformation erzeugt, die eine relative oder absolute Position des Flurförderzeugs angibt; und

- eine Steuerung (300), die so konfiguriert ist, dass sie ein Steuersignal zur Durchführung einer autonomen/unterstützten Fahrfunktion des Flurförderzeugs auf Basis der ersten Positionsinformationen und der zweiten Positionsinformationen erzeugt,

**dadurch gekennzeichnet, dass** die Steuerung so konfiguriert ist, dass sie die erste Positionsinformation und die zweite Positionsinformation vergleicht, um die Korrektheit der durch die erste Positionsinformation angezeigten Position zu verifizieren und/oder eine Schätzung der Position des Flurförderzeugs auf der Grundlage des Ergebnisses des Vergleichs zu justieren.

2. System (10) gemäß Anspruch 1, wobei die Steuerung (300) so konfiguriert ist, dass sie einen Abstand zwischen einer ersten Position, die durch die erste Positionsinformation angezeigt wird, und einer zweiten Position, die durch die zweite Positionsinformation angezeigt wird, bestimmt und ein Signal zum Auslösen eines Alarms erzeugt, falls der bestimmte Abstand einen vorgegebenen Schwellenwert überschreitet

3. System (10) gemäß Anspruch 1 oder Anspruch 2, wobei die Steuerung (300) so konfiguriert ist, dass sie eine aktuelle Position des Flurförderzeugs (40) auf der Grundlage sowohl der ersten Positionsinformation als auch der zweiten Positionsinformation schätzt.

4. System (10) gemäß einem der Ansprüche 1 bis 3,

wobei das System eine Datenbank (214) umfasst, auf die aus der zweiten Lokalisierungsvorrichtung (210) zugegriffen werden kann, wobei die Datenbank so konfiguriert ist, dass sie jede einer Vielzahl von verschiedenen optischen Markierungen (80; 90; 92; 94; 96) in Verbindung mit einer entsprechenden Markierungsposition speichert

wobei das Verarbeitungsmittel (212) so konfiguriert ist, dass es eine optische Markierung, die in der Nähe des Flurförderzeugs (40) positioniert ist, auf Basis mindestens eines der Videosignale detektiert und die zweite Positionsinformation auf Basis der Markierungsposition, die detektierten optischen Markierung entspricht, erzeugt.

5. System gemäß Anspruch 4, wobei die Datenbank (214) so konfiguriert ist, dass sie in Verbindung mit jeder optischen Markierung (80; 90; 92; 94; 96) Informationen über Größe und/oder Ausrichtung der optischen Markierung speichert.

6. System (10) gemäß einem der Ansprüche 1-5, wobei das Verarbeitungsmittel (212) so konfiguriert ist, dass es eine Position des Flurförderzeugs (40) durch Anwendung eines visuellen Odometrieverfahrens unter Verwendung mindestens eines der Videosignale bestimmt.

7. System (10) gemäß einem der Ansprüche 1 bis 6, wobei die Vielzahl von Kameras mindestens eine Stereokamera (220), die an einem vorderen Teil und/oder einem hinteren Teil des Flurförderzeugs (40) anzubringen ist, und mindestens drei monokulare Kameras (230, 232, 234), die an Seitenteilen des Flurförderzeugs anzubringen sind, umfasst.

8. System (10) gemäß einem der Ansprüche 1 bis 7, das ferner mindestens eines umfasst von: einem GPS-Empfänger (120), einem LIDAR (130) und einer Trägheitsmesseinheit IMU (140), wobei die erste Lokalisierungsvorrichtung (110) so konfiguriert ist, dass sie die erste Positionsinformation auf der Grundlage von Daten erzeugt, die von mindestens einem von dem GPS-Empfänger, dem LIDAR und der IMU erhalten werden.

9. System (10) gemäß einem der Ansprüche 1-8, wobei die Steuerung (300) konfiguriert ist, um:

   Zu bestimmen, wenn ein erster Abstand zu einer optischen Markierung (80; 90; 92; 94; 96) unter Verwendung der Videosignale bestimmt wird, ob die LIDAR-Daten in der ersten Positionsinformation mindestens ein der optischen Markierung entsprechendes Merkmal enthalten, einen zweiten Abstand zur optischen Markierung unter Verwendung der LIDAR-Daten zu bestimmen, und den ersten Abstand und den zweiten Abstand zu vergleichen, um die Genauigkeit des ersten und/oder des zweiten Abstands zu überprüfen.

10. System (10) gemäß einem der Ansprüche 1 bis 9, wobei die Steuerung (300) so konfiguriert ist, dass sie die zweite Positionsinformation zur Erzeugung des Steuersignals verwendet, wenn die erste Lokalisierungsvorrichtung (110) nicht die erste Positionsinformation erzeugt.

11. Flurförderzeug, das System gemäß einem der Ansprüche 1 bis 10 umfassend.

12. Flurförderzeug gemäß Anspruch 11, wobei mindestens zwei Kameras aus der Vielzahl der Kameras entsprechende Bereiche haben, sich teilweise überlappen.

13. Verfahren zum autonomen oder unterstützten Fahren eines Flurförderzeugs (40), wobei das Verfahren umfasst:

   Erzeugen (S404) einer ersten Positionsinformation, die eine Position des Flurförderzeugs angibt, auf der Grundlage von Daten, die aus einem globalen Navigationssatellitensystem, GNSS (120), empfangen wurden;
   Empfangen (S406) einer Vielzahl von Videosignalen, die von einer Vielzahl von auf dem Flurförderzeug montierten Kameras (220; 230; 232; 234) erzeugt werden, und Aufnehmen einer Umgebung des Flurförderzeugs;
   Erzeugen (S408), basierend auf den Videosignalen, einer zweiten Positionsinformation, die eine relative oder absolute Position des Flurförderzeugs anzeigt; und
   Erzeugen (S410) eines Steuersignals zur Durchführung einer autonomen/unterstützten Fahrfunktion des Flurförderzeugs auf Basis der ersten Positionsinformation und der zweiten Positionsinformation,
   **dadurch gekennzeichnet, dass** das Verfahren den Vergleich (S708) der ersten Positionsinformation und der zweiten Positionsinformation umfasst, um die Richtigkeit der durch die erste Positionsinformation angegebenen Position zu verifizieren und/oder eine Schätzung der Position des Flurförderzeugs auf Basis des Ergebnisses des Vergleichs anzupassen.

14. Computerprogramm, Anweisungen umfassend, die, wenn sie von einem oder mehreren Prozessoren ausgeführt werden, den einen oder die mehreren Prozessoren veranlassen, das Verfahren gemäß Anspruch 13 durchzuführen.

15. Steuerung (300) für autonomes oder unterstütztes Fahren eines Flurförderzeugs (40), wobei die Steuerung so konfiguriert ist, dass sie das Verfahren gemäß Anspruch 13 durchführt.

**Revendications**

1. Système (10) pour la conduite autonome ou assistée d'un chariot de manutention (40), le système pouvant être monté dans ou sur le chariot de manutention, et comprenant :

   - un premier dispositif de localisation (110) pour localiser le chariot de manutention, le premier dispositif de localisation étant configuré pour générer, sur la base de données reçues d'une géolocalisation et navigation par un système de satellites, GNSS (120), des premières informations de position indiquant une position du chariot de manutention ;
- une pluralité de caméras (220, 230, 232, 234) configurées pour capturer un environnement du chariot de manutention pour générer une pluralité de signaux vidéo ;
- un deuxième dispositif de localisation (210) pour localiser le chariot de manutention, dans lequel le deuxième dispositif de localisation comporte des moyens de traitement (212) configurés pour générer, sur la base des signaux vidéo, des deuxièmes informations de position indiquant une position relative ou absolue du chariot de manutention ; et
- un dispositif de commande (300) configuré pour générer un signal de commande pour réaliser une fonction de conduite autonome/assistée du chariot de manutention sur la base des premières informations de position et des deuxièmes informations de position,

**caractérisé en ce que** le dispositif de commande est configuré pour comparer les premières informations de position et les deuxièmes informations de position pour vérifier l'exactitude de la position indiquée par les premières informations de position, et/ou pour ajuster une estimation de la position du chariot de manutention sur la base du résultat de la comparaison.

2. Système (10) selon la revendication 1, dans lequel le dispositif de commande (300) est configuré pour déterminer une distance entre une première position indiquée par les premières informations de position et une deuxième position indiquée par les deuxièmes informations de position, et pour générer un signal pour déclencher une alerte si la distance déterminée dépasse un seuil prédéterminé.

3. Système (10) selon la revendication 1 ou la revendication 2, dans lequel le dispositif de commande (300) est configuré pour estimer une position actuelle du chariot de manutention (40) sur la base à la fois des premières informations de position et des deuxièmes informations de position.

4. Système (10) selon l'une des revendications 1 à 3,

dans lequel le système comprend une base de données (214) accessible par le deuxième dispositif de localisation (210), la base de données étant configurée pour stocker chacun d'une pluralité de marqueurs optiques (80 ; 90 ; 92 ; 94 ; 96) différents en association avec une position de marqueur correspondante,
dans lequel les moyens de traitement (212) sont configurés pour détecter un marqueur optique positionné près du chariot de manutention (40) sur la base d'au moins un des signaux vidéo, et pour générer les deuxièmes informations de position sur la base de la position de marqueur correspondant au marqueur optique détecté.

5. Système selon la revendication 4, dans lequel la base de données (214) est configurée pour stocker, en association avec chaque marqueur optique (80 ; 90 ; 92 ; 94 ; 96), des informations sur la taille et/ou l'orientation du marqueur optique.

6. Système (10) selon l'une des revendications 1 à 5, dans lequel les moyens de traitement (212) sont configurés pour déterminer une position du chariot de manutention (40) en appliquant un processus d'odométrie visuelle à l'aide d'au moins un des signaux vidéo.

7. Système (10) selon l'une des revendications 1 à 6, dans lequel la pluralité de caméras comporte au moins une caméra stéréo (220) à monter sur une partie avant et/ou une partie arrière du chariot de manutention (40), et au moins trois caméras monoculaires (230, 232, 234) à monter sur des parties latérales du chariot de manutention.

8. Système (10) selon l'une des revendications 1 à 7, comprenant en outre au moins un parmi un récepteur de géolocalisation par satellite, GPS, (120), un LIDAR (130), et une unité de mesure inertielle, IMU (140),
dans lequel le premier dispositif de localisation (110) est configuré pour générer les premières informations de position sur la base de données obtenues à partir d'au moins un parmi le récepteur GPS, le LIDAR et l'IMU.

9. Système (10) selon l'une des revendications 1 à 8, dans lequel le dispositif de commande (300) est configuré pour :
déterminer, lorsqu'une première distance par rapport à un marqueur optique (80 ; 90 ; 92 ; 94 ; 96) est déterminé à l'aide des signaux vidéo, si les données LIDAR dans les premières informations de position comportent au moins une caractéristique correspondant au marqueur optique, déterminer une deuxième distance par rapport au marqueur optique en utilisant les données LIDAR, et comparer la première distance et la deuxième distance pour vérifier la précision de la première distance et/ou de la deuxième distance.

10. Système (10) selon l'une des revendications 1 à 9, dans lequel le dispositif de commande (300) est configuré pour utiliser les deuxièmes informations de position pour générer le signal de commande, lorsque le premier dispositif de localisation (110) ne génère pas les premières informations de position.

**11.** Chariot de manutention comprenant le système selon l'une des revendications 1 à 10.

**12.** Chariot de manutention selon la revendication 11, dans lequel au moins deux caméras de la pluralité de caméras ont des portées respectives qui se chevauchent partiellement.

**13.** Procédé pour la conduite autonome ou assistée d'un chariot de manutention (40), le procédé comprenant les étapes suivantes :

> générer (S404), sur la base de données reçues d'une géolocalisation et navigation par un système de satellites, GNSS (120), des premières informations de position indiquant une position du chariot de manutention ;
> recevoir (S406) une pluralité de signaux vidéo générés par une pluralité de caméras (220 ; 230 ; 232 ; 234) montées sur le chariot de manutention, et capturer un environnement du chariot de manutention ;
> générer (S408), sur la base des signaux vidéo, des deuxièmes informations de position indiquant une position relative ou absolue du chariot de manutention ; et
> générer (S410) un signal de commande pour réaliser une fonction de conduite autonome/assistée du chariot de manutention sur la base des premières informations de position et des deuxièmes informations de position,
> **caractérisé en ce que** le procédé comprend la comparaison (S708) des premières informations de position et des deuxièmes informations de position pour vérifier l'exactitude de la position indiquée par les premières informations de position, et/ou pour ajuster une estimation de la position du chariot de manutention sur la base du résultat de la comparaison.

**14.** Programme informatique comprenant des instructions qui, lorsqu'elles sont exécutées par un ou plusieurs processeurs, amènent les un ou plusieurs processeurs à réaliser le procédé selon la revendication 13.

**15.** Dispositif de commande (300) pour la conduite autonome ou assistée d'un chariot de manutention (40), le dispositif de commande étant configuré pour réaliser le procédé selon la revendication 13.

Fig. 1

Fig. 2

Fig. 3A

Fig. 3B

START

Rceive data from GPS, LIDAR and IMU — S402

Receive video signals — S406

Generate first position information — S404

Generate second position information — S408

Generate control signal based on first position information and second position information — S410

END

# Fig. 4

GENERATE FIRST POSITION
INFORMATION

S502

NO   GPS data accuracy above
threshold?   YES

Obtain first GPS position — S506

Obtain LIDAR odometry data using
LIDAR data — S508

Obtain IMU odometry data using
IMU data — S510

Obtain second GPS position — S512

Calculate GPS movement from first
GPS position to second GPS
position — S514

Generate first position information
based on LIDAR odometry data,
IMU odometry data, and GPS
movement — S516

S504

Do not generate first
position information

RETURN

# Fig. 5

GENERATE SECOND POSITION
INFORMATION

Perform image stitching on
received video signals to obtain
combined video signal — S602

Detect optical marker on image
of combined video signal — S604

Determine spatial relationship
relative to detected marker
from image — S606

Obtain marker position
corresponding to detected
marker from database — S608

Determine truck position
relative to marker based on
spatial relationship and marker
position — S610

Perform visual odometry
process using the video signals — S612

Correlate truck position to
visual odometry — S614

Generate second position
information based on
correlation — S616

RETURN

# Fig. 6

GENERATE CONTROL SIGNAL BASED ON FIRST POSITION
INFORMATION AND SECOND POSITION INFORMATION

S702

Receive position information

S704

First position
information received?

S708

Compare first position indicated
by first position information and
second position indicated by
second position information

S706

Generate control signal
based on second
position information

S710

Distance between first position
and second position greater
than threshold?

YES

NO

S712

Generate signal for
triggering an alert

S716

Estimate current position of
industrial truck based on first
position information and second
position information

S714

Generate control signal
to interrupt movement
of industrial truck

S718

Generate control signal based on
estimated current position

RETURN

Fig. 7

Zone A

90

96

94

92

94

# Fig. 8

# Fig. 9

**REFERENCES CITED IN THE DESCRIPTION**

**Patent documents cited in the description**

- US 20140277691 A1
- WO 2021170852 A1
- US 10689194 B2